# EUROPEAN PATENT SPECIFICATION

(11) **EP 4 098 818 B1**
(45) Date of publication and mention of the grant of the patent: **17.04.2024**
(21) Application number: 21186677.7
(22) Date of filing: 20.07.2021
(51) Int. Cl.: E04B 1/00, F16B 2/10, B25B 5/06, B66C 1/42, B66C 1/66, F16B 7/22

(54) **CANTILEVER STRUCTURE AND ITS METHOD OF ATTACHMENT**
AUSKRAGENDE KONSTRUKTION UND VERFAHREN ZU IHRER BEFESTIGUNG
CONSTRUCTION EN PORTE-À-FAUX ET PROCÉDÉ DE FIXATION

(30) Priority: 31.05.2021 LT 2021525
(43) Date of publication of application: 07.12.2022
(60) Divisional application: 23190788.2
(73) Proprietor: Staticus, UAB, 02190 Vilnius (LT)
(72) Inventor: Radkevicius, Karolis, 08217 Vilnius (LT); Gudaitis, Vaidas, 08217 Vilnius (LT); Masickas, Tadas, 09312 Vilnius (LT)
(74) Representative: Zaboliene, Reda

(56) References cited:
- GB-A- 2 577 113
- US-A1- 2018 274 305

## Description

### Pertinent Art

The invention is related to a cantilever structure and its attachment to a building.

### State of Art

The balcony is one of the most complex building structures. Its attachment to a building must be quick and convenient, and meet strict safety requirements. As a result, the balcony structures, their attachment methods and the devices used for this purpose are constantly being improved.

The patent document WO2014174269A1 (published 30/10/2014) provides for a balcony structure, a method and a tool kit for attaching a balcony to a building or an existing structure. One aspect of the invention provides for the balcony for attachment to an existing structure, where the said structure has a plurality of stubs fitted thereto, each stub having a first engagement portion, the balcony having a plurality of second engagement portions on one side of the balcony wherein the first and second engagement portions are arranged to engage with each other so as to cause the weight of the balcony to be supported by the existing structure and the balcony to be securely attached to the structure.

The patent document WO2016178016A1 (published on 10/11/2016) provides a fixing for attaching a balcony to a support, which allows for significant accommodation of the construction tolerances in the installation of the support, whilst still securely attaching the balcony to the support. In one embodiment, the fixing includes: a connector section; a clamping section for securing the fixing to the support by clamping at least part of the support between the clamping section and the connector section, the clamping section being adjustably attachable to the connector section by at least one first fastener; a support section for supporting the balcony relative to the support, the support section being adjustably attached to and separated from the connector section by at least one second fastener; and at least one third fastener for securing the balcony to the fixing. The invention also provides a balcony and a method of installing the balcony which allow the pitch of the balcony to be adjusted once installed and secured in place, preferably only through access from the underneath of the balcony.

The closest patent document GB2577113A (published on 18/03/2020) provide for the method of installing a balcony to a building facade by aligning the balcony, preferably having a support beam, with a projection of the facade, preferably I-beam stub, such that an activatable tapered shaft or skewer, attached to the balcony, is aligned with the socket in the projection, driving the shaft through the socket to correctly locate and secure the balcony to the facade, then locking the balcony to the facade using further fixings. The shaft may be operated by an electric, pneumatic or hydraulic actuator. The actuator and the shaft may be removed after the balcony is secured to the projection with the fixings. There may be a joining plate attached to the balcony for extending over a gap between the balcony and the stub, the plate having an aperture. The invention also presents an activatable balcony fixing including a tapered shaft, actuator and mount, as well as a balcony and a kit of parts.

The present invention differs from the above-mentioned patents in that it provides an alternative method of attaching a balcony by use of a special device.

### Summary of the Invention

As used further herein, the term "balcony" includes various types of balconies as well as other cantilever structures that transmit loads to the building structure, such as marking signs, external photovoltaic structures, heat collectors, accessory holders, arch covers, sun protection systems, plant pots, screens and similar structures that cross the facade of the building and whose load is transferred directly to the structure of the building.

This description presents a new method of balcony attaching to a facade and a device designed for that purpose. The method of attaching of the balcony includes the following steps: the balcony is lifted to the required height; the balcony beams are brought to the facade cantilevers using guide plates by aligning the balcony both horizontally and vertically; the balcony beams are attached to the lugs of the fastening cantilever by means of the balcony attaching device, where upon activation of the actuator of the balcony attaching device, which is connected to a scissor mechanism, the latter clamps on the fastening lug; then the balcony beams are fastened to the cantilevers by means of connecting elements. The balcony attaching device is mounted on at least two balcony beams. The balcony includes load-bearing beams, a frame, a partition/handrail, and finishing materials.

The balcony attaching device comprises of: a housing; an actuator in the housing; a scissor mechanism connected to the actuator by a sliding element; at least two latches attached to the rear of the housing for securing the housing to a guide plate. The scissor mechanism is operated by an electric or hydraulic, or pneumatic actuator and includes: at least a pair of scissors; a central fastening element with at least the pair of scissors; connecting elements, one end of which is connected to the sliding element and the other end - to the scissors.

The presented method of the balcony attachment by means of the balcony attaching device does not require additional lifting devices for lifting of persons attaching the balcony to the facade. This method also allows for fitting a fully finished balcony structure to a building with minimal resources.

### Brief Description of Drawings

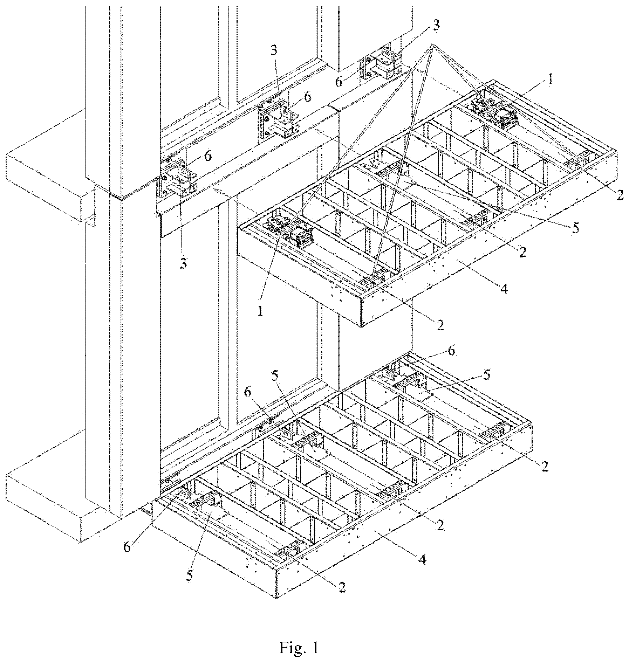

Fig. 1 Isometric view of attaching the balcony to the facade.
Fig. 2 Isometric view of the balcony beam attachment to the cantilever.
Fig. 3 Isometric view of the balcony attaching device connected to the balcony beam.
Fig. 4 Isometric view of the balcony attaching device with additional fastening plates.
Fig. 5 Isometric view of the scissor mechanism of the balcony attaching device.

The presented figures are rather of an illustrative nature, therefore their scale, proportions, and other aspects do not necessarily correspond precisely to the actual technical solution.

### Description of the Preferred Embodiments

This description includes the new method for balcony attachment to a facade and the device designed for that purpose. The balcony attachment method includes the following steps:
the balcony (4) is lifted to the required height;
the balcony beams (2) are brought to the cantilevers (3), secured to the facade, by means of the guide plates (5), attached to the balcony beams (2), so that the balcony (4) is aligned both horizontally and vertically;
the balcony beams (2) are fixed to the fixing lugs (6), attached to the cantilevers (3), by means of the balcony attaching device (1), where upon activation of the actuator (7) of the balcony attaching device (1), which is connected to a scissor mechanism (11), the later clamps on the fastening lug (3);
the balcony beams (2) are further fastened to the cantilevers (3) by means of connecting elements.

The balcony (4) includes at least load-bearing beams, a frame, a partition/handrail, and finishing materials. The balcony (4) is manufactured and assembled at the factory, and delivered to the construction site.

The balcony (4) is lifted to the required height by a crane or another lifting machine and brought to the facade cantilevers (3) by use of guiding equipment, such as ropes, straps, slings, etc.

The cantilevers (3) with the fixing lugs (6) attached to them are pre-prepared and attached to the facade on site.

The balcony attaching device (1) is mounted on at least two balcony beams (2), where before lifting the balcony to the required height, the scissor mechanism (11) of the device (1) is set to its initial position, in which the pair of scissors (16) is opened. Upon bringing of the balcony beams (2) to the cantilevers (3) by means of guide plates (5), the actuator (7) of the balcony attaching device (1) connected to the scissor mechanism (11) is activated and the latter is set to its end position in which the pair of scissors ( 16) clamps over the aperture of the fixing lug (6), where the fixing lug (6) is attached to the cantilever (3). In the front part of the guide plate (5), there is an Y-shaped notch that aligns the balcony beam (2) with the cantilever by covering the fixing lug (6). Upon attaching of the balcony (4) to the facade by means of the balcony attaching device (1), a safety information equipment (indicator) is activated and informs that the persons attaching the balcony are allowed to climb on the balcony. The said safety information mechanism may be a sensor of the shaft motion or a coloured arrow. Upon climbing on the balcony, the persons fasten the attached balcony beams (2) to the cantilevers (3) with the fasteners, such as bolts, pins, etc., and detach the hook of the crane or another lifting machine as well as remove the balcony attaching device (1). The balcony beam (2) is fastened to the cantilever by fastening elements on a bottom part, where the fastening plates with apertures are provided in the front parts both of the beam (2) and the cantilever (3), and in the upper part, where the apertures are provided on both sides in the front part of the guide plate and on both sides of the upper part of the cantilever. Until the balcony (4) is mechanically fixed to the facade, access to the balcony (4) being attached is prohibited due to safety requirements.

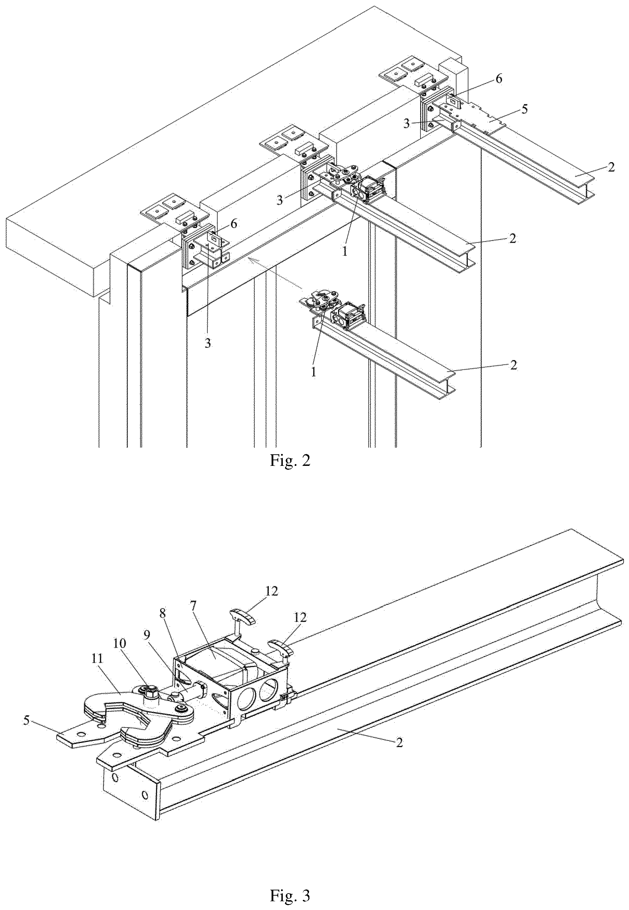

The balcony attaching device (1) designed for attaching the balcony (4) to a facade comprises (Fig. 3):
a housing (8),
an actuator (7) enclosed in the housing,
at least two latches (12) attached in the rear part of the housing (8) intended for fastening of the housing (8) to the guide plate (5),
a scissor mechanism (11) connected to the electric actuator (7) by a sliding element (9),
where upon activation of the actuator (7), the scissor mechanism (11) clamps on the fixing lug (6) attached to the cantilever (3).

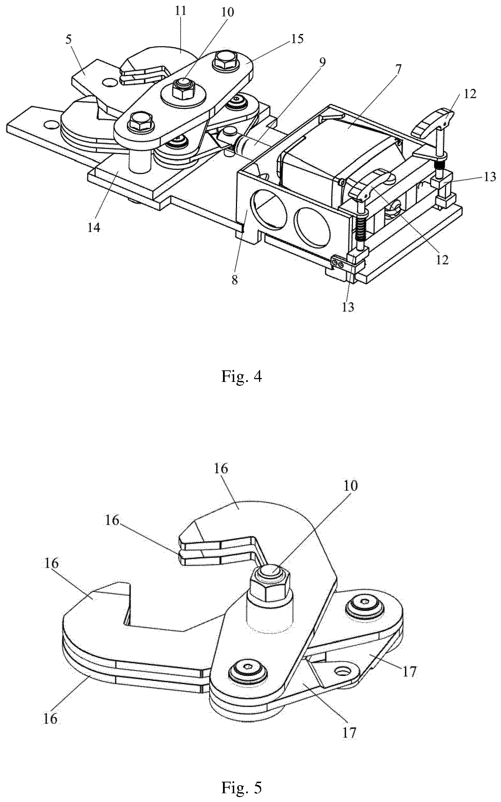

The balcony attaching device (2) is fitted to the balcony beam via the guide plate (5) that is tightly secured to the beam (2) The device (1) is fastened to the front part of the guide plate (5) by means of the central fastening element (10), such as a bolt or a pin. The device (1) can be fastened to the front part of the guide plate (5) by means of the upper (15) and the lower (14) plates arranged parallel to each other, where both said plates have the fixing apertures at their ends, which coincide with the apertures at the edges of the guide plate (5) (Fig. 4). The device (1) is fastened to the rear part of the housing (8) by the notches of the side walls, which are locked in the grooves present on both sides at the end of the guide plate. The notches in the side walls of the housing (8) are fixed in the grooves by at least two latches (12) fitted at the rear part of the housing (8). Upon pressing the latch (12) in the vertical direction downwards, it presses the pin (13) attached to the housing (8) and the said pin (13) pushes the housing (8) forward until the notches on its side walls are locked in the grooves of the guide plate (5), thereby pushing the scissor mechanism (11) until its central aperture is aligned with the aperture on the fixing plate (5), and in case where the upper (15) and the lower (14) fixing plates are used, the fixing apertures of these plates are aligned with the fixing apertures of the guide plate (5). Upon pressing the latch (12) in the vertical direction upwards, the pin (13) is released and the device (1) can be removed from the guide plate (5) after releasing the central fastening element (10) or the fasteners by which the upper (15) and the lower (14) fixing plates are fixed to the guide plate (5).

The scissor mechanism (11) comprises (Fig. 5): at least a pair of scissors (16) arranged symmetrically with respect to the vertical axis of a central fastening element (10); the central fastening element (10) with at least the pair of scissors (16); the connecting pieces (17), one end of which is attached to the sliding element (9) and the other end - to the parts of scissors (16).

A part of scissors (16) is an elongate flat element with one folded end and the apertures for fixing it to the central fastening element (10) and the connecting piece (17) as well as to the other part of scissors.

The scissor mechanism (11) is operated by an actuator (7) connected through a sliding mechanism (9), one end of which is connected to the actuator (7), the other - to the connecting pieces (17) connected to the parts of scissors (16). The said actuator (7) is an electric or hydraulic, or pneumatic actuator. When the actuator (7) is activated, the sliding element (9) moves in the longitudinal direction, thus affecting the connecting pieces (17), which change the position of the parts of scissors (16). The connecting pieces (17) and the parts of scissors (16) are connected to each other by fasteners.

In order to illustrate and describe the present invention, a description of the best options for implementation is provided above. This description is neither exhaustive nor limiting and is not intended to determine the exact form or version of implementation. The above description should be considered as an illustration rather than as a limitation.

The options of implementation described by those skilled in the art may include modifications without departing from the scope of the present invention, as defined in the claims below.

## Claims

1. A cantilever structure (4) comprising attaching devices (1) for attaching to a building façade, comprising:
at least two beams (2) with on each tightly secured guide plates (5) for aligning the cantilever structure (4) both horizontally and vertically with cantilevers (3) secured to the façade;
**characterised in that** an attaching device (1) is removably attached on each of said guide plates (5), said attaching device (1) comprising:
a housing (8), an actuator (7) enclosed in the housing (8), a scissor mechanism (11) connected to said actuator (7) by a sliding element (9), where upon activation of the actuator (7), the scissor mechanism (11) clamps on the fixing lug (6) attached to the cantilever (3) of the building.

2. A cantilever structure (4) according to claim 1 **characterised in that** said attaching devices (1) further comprise at least two latches (12) attached in the rear part of the housing (8) intended for fastening of the housing (8) to a guide plate (5).

3. A cantilever structure (4) according to any of the preceding claims **characterised in that** the actuator (7) is an electric or hydraulic, or pneumatic actuator.

4. A cantilever structure (4) according to any of the preceding claims, **characterised in that** the scissor mechanism (11) comprises: at least a pair of scissors (16) arranged symmetrically with respect to the vertical axis of a central fastening element (10); connecting pieces (17), one end of which is attached to the sliding element (9) and the other end - to the parts of scissors (16).

5. A cantilever structure (4) according to any of the preceding claims, **characterised in that** the cantilever structure (4) is a balcony.

6. A cantilever structure (4) according to claim 5, **characterised in that** the balcony comprises a frame, a partition/handrail, and finishing materials.

7. A method for attaching a cantilever structure (4) according to any of claims 1-6 to a building comprising the following steps:
lifting the cantilever structure (4) to the required height;
bringing the beams (2) of the cantilever structure to the cantilevers (3) secured to the facade of the building by means of the guide plates (5) attached to the beams (2), so that the cantilever structure (4) is aligned both horizontally and vertically with the cantilevers (3);
fixing the beams (2) to the fixing lugs (6) attached to the cantilevers (3) by means of the balcony attaching device (1);
fastening the beams (2) of the cantilever structure to the cantilevers (3) by means of connecting elements.

8. The method of attaching according to claim 7, **characterised in that** upon attaching of the cantilever structure (4) to the facade by means of the balcony attaching devices (1), a safety information equipment, indicator, is activated and informs that the persons attaching the balcony are allowed to climb on the balcony to finish the attachment works.

9. The method of attaching according to any of claims 7 and 8 **characterised in that** before lifting the cantilever structure (4) to the required height, the scissor mechanism (11) of the balcony attaching device (1) is set to its initial position, in which the pair of scissors (16) is opened.

## Patentansprüche

1. Eine Kragenstruktur (4) mit Befestigungsvorrichtungen (1) zum Anbringen an einer Gebäudefassade, umfassend:
mindestens zwei Träger (2) mit jeweils fest befestigten Führungsplatten (5) zur horizontalen und vertikalen Ausrichtung der Kragenstruktur (4) mit an der Fassade befestigten Kragarmen (3);
**dadurch gekennzeichnet, dass** an jeder der Führungsplatten (5) eine Befestigungsvorrichtung (1) abnehmbar angebracht ist, wobei die Befestigungsvorrichtung (1) folgendes umfasst:
ein Gehäuse (8), einen im Gehäuse (8) eingeschlossenen Aktuator (7), einen Scherenmechanismus (11), der über ein Schiebeelement (9) mit dem Aktuator (7) verbunden ist, wobei bei Aktivierung des Aktuators (7) und der Scherenmechanismus (11) an der am Ausleger (3) des Gebäudes befestigten Befestigungslasche (6) klemmt.

2. Eine Kragenstruktur (4) nach Anspruch 1, **dadurch gekennzeichnet, dass** die Befestigungsvorrichtung (1) außerdem mindestens zwei Riegel (12) umfasst, die im hinteren Teil des Gehäuses (8) angebracht sind und zur Befestigung des Gehäuses (8) an einem bestimmten Ort der Führungsplatte (5) dienen.

3. Eine Kragenstruktur (4) nach einem der vorhergehenden Ansprüche, **dadurch gekennzeichnet, dass** der Aktuator (7) ein elektrischer oder hydraulischer, oder pneumatischer Aktuator ist.

4. Eine Kragenstruktur (4) nach einem der vorhergehenden Ansprüche, **dadurch gekennzeichnet, dass** der Scherenmechanismus (11) umfasst: mindestens eine Schere (16), die symmetrisch zur vertikalen Achse eines zentralen Befestigungselements (10) angeordnet ist; die Verbindungsstücke (17), von denen ein Ende am Gleitelement (9) und das andere Ende an den Scherenteilen (16) befestigt ist.

5. Eine Kragenstruktur (4) nach einem der vorhergehenden Ansprüche, **dadurch gekennzeichnet, dass** die Auslegerkonstruktion (4) ein Balkon ist.

6. Eine Kragenstruktur (4) nach Anspruch 5, **dadurch gekennzeichnet, dass** der Balkon einen Rahmen, eine Trennwand/einen Handlauf und Endbearbeitungsmaterialien umfasst.

7. Ein Verfahren zur Befestigung einer Kragenstruktur (4) nach einem der Ansprüche 1-6 an einem Gebäude, umfassend die folgenden Schritte:
das Anheben der Kragkonstruktion (4) auf die erforderliche Höhe;
das Bringen der Balken (2) der Kragarmkonstruktion an die an der Fassade des Gebäudes befestigten Kragarme (3) mittels der an den Balken (2) befestigten Führungsplatten (5), so dass die Kragenstruktur (4) sowohl horizontal als auch vertikal mit den Auslegern (3) ausgerichtet wird;
das Befestigen der Balken (2) an den an den Kragarmen (3) befestigten Befestigungslaschen (6) mittels der Befestigungsvorrichtung (1);
das Befestigen der Balken (2) der Kragarmkonstruktion an den Kragarmen (3) mittels Verbindungselementen.

8. Ein Verfahren zur Befestigung nach Anspruch 7, **dadurch gekennzeichnet, dass** bei der Befestigung der Kragenstruktur (4) an der Fassade mittels der Balkonbefestigungsvorrichtungen (1) eine Sicherheitsinformationseinrichtung und ein Indikator aktiviert wird und die anbringenden Personen darüber informiert werden, dass es erlaubt ist, auf den Balkon zu klettern, um die Befestigungsarbeiten abzuschließen.

9. Ein Befestigungsverfahren nach einem der Ansprüche 7 und 8, **dadurch gekennzeichnet, dass** vor dem Anheben der Kragenstruktur (4) auf die erforderliche Höhe der Scherenmechanismus (11) der Balkonbefestigungsvorrichtung (1) in seine Ausgangsposition gebracht wird, wodurch die Schere (16) geöffnet wird.

## Revendications

1. Structure en porte-à-faux (4) comprenant des dispositifs de fixation (1) destinés à être fixés à la façade d'un bâtiment, comprenant :
au moins deux poutres (2) sur lesquelles sont fixées des plaques de guidage (5) pour aligner la structure en porte-à-faux (4) horizontalement et verticalement avec les porte-à-faux (3) fixés à la façade ;
**caractérisée par le fait qu'**un dispositif de fixation (1) est fixé de manière amovible sur chacune desdites plaques de guidage (5), ledit dispositif de fixation (1) comprenant :
un boîtier (8), un actionneur (7) enfermé dans le boîtier (8), un mécanisme de ciseaux (11) relié audit actionneur (7) par un élément coulissant (9), où, lors de l'activation de l'actionneur (7), le mécanisme de ciseaux (11) s'accroche à la patte de fixation (6) attachée au porte-à-faux (3) du bâtiment.

2. Structure en porte-à-faux (4) selon la revendication 1, **caractérisée par le fait que** ledit dispositif de fixation (1) comprend en outre au moins deux loquets (12) fixés dans la partie arrière du boîtier (8) et destinés à fixer le boîtier (8) à une plaque de guidage (5).

3. Structure en porte-à-faux (4) selon n'importe laquelle des revendications précédentes, **caractérisée par le fait que** l'actionneur (7) est un actionneur électrique, hydraulique ou pneumatique.

4. Structure en porte-à-faux (4) selon l'une quelconque des revendications précédentes, **caractérisée par le fait que** le mécanisme de ciseaux (11) comprend : au moins une paire de ciseaux (16) disposés symétriquement par rapport à l'axe vertical d'un élément de fixation central (10) ; des pièces de liaison (17) dont une extrémité est fixée à l'élément coulissant (9) et l'autre extrémité - aux parties des ciseaux (16).

5. Structure en porte-à-faux (4) selon n'importe laquelle des revendications précédentes, **caractérisée par le fait que** la structure en porte-à-faux (4) est un balcon.

6. Structure en porte-à-faux (4) selon la revendication 5, **caractérisée par le fait que** le balcon comprend un cadre, une cloison/rampe et des matériaux de finition.

7. Procédé de fixation d'une structure en porte-à-faux (4) selon l'une des revendications 1 à 6 à un bâtiment, comprenant les étapes suivantes :
soulever la structure en porte-à-faux (4) à la hauteur requise ;
amener les poutres (2) de la structure en porte-à-faux aux porte-à-faux (3) fixés à la façade du bâtiment grâce aux plaques de guidage (5) fixées aux poutres (2), de manière à ce que la structure en porte-à-faux (4) soit alignée horizontalement et verticalement avec les porte-à-faux (3) ;
fixer les poutres (2) aux pattes de fixation (6) fixées aux porte-à-faux (3) grâce au dispositif de fixation (1) ;
fixer les poutres (2) de la structure en porte-à-faux aux porte-à-faux (3) au moyen d'éléments de liaison.

8. Procédé de fixation selon la revendication 7, **caractérisé par le fait que** lors de la fixation de la structure en porte-à-faux (4) sur la façade grâce aux dispositifs de fixation de balcon (1), un équipement d'information de sécurité, indicateur, est activé et informe que les personnes fixant les balcons sont autorisés à grimper sur le balcon pour terminer les travaux de fixation.

9. Procédé de fixation selon n'importe quelle des revendications 7 et 8 **caractérisé par le fait qu'**avant de soulever la structure en porte-à-faux (4) à la hauteur requise, le mécanisme à ciseaux (11) du dispositif de fixation de balcon (1) est réglé dans sa position initiale, en laquelle la paire de ciseaux (16) est ouverte.
